# EUROPEAN PATENT SPECIFICATION

(11) **EP 0 653 050 B1**
(45) Date of publication and mention of the grant of the patent: **15.10.1997**
(21) Application number: 93918600.3
(22) Date of filing: 03.08.1993
(51) Int. Cl.: G01D 5/249

(54) **POSITION DETECTION APPARATUS**
POSITIONSERFASSUNGSVORRICHTUNG
APPAREIL DE DETECTION DE POSITION

(30) Priority: 03.08.1992 US 924122
(43) Date of publication of application: 17.05.1995
(73) Proprietor: ROCKWELL INTERNATIONAL CORPORATION, Troy, MI 48084 (US)
(72) Inventor: STREET, Thomas, Southgate, MI 48195 (US)
(74) Representative: Leiser, Gottfried, Dipl.-Ing.
(86) International application number: PCT/US93/07279
(87) International publication number: WO 94/03779

(56) References cited:
- EP-A- 0 047 463
- WO-A-89/04566
- DE-A- 4 038 284
- GB-A- 2 125 645
- US-A- 4 788 497
- Experiencing Electronics, Mark. E. Hazen, 1989, pp.102, 103.

## Description

### BACKGROUND OF THE INVENTION

### FIELD OF THE INVENTION

This invention relates to position detecting apparatus and, more specifically, to position detecting apparatus using a unique pulse pattern to define and continuously verify a respective position detection.

### DESCRIPTION OF THE RELATED ART

In many control applications it is necessary to know the position of a movable portion of the system. Several methods have been used to accomplish such an objective. A first group of methods provides an absolute position of the system at any given point. These sensors typically utilize a potentiometer which provides a resistance value corresponding to a specific position. The advantage of this type of system is that there is no loss of reference such that the system requires calibration. A second group of position sensors are relative in nature. These systems have a zero or calibration point and generate pulses as the system moves from this point of calibration. The system position is determined by adding or subtracting the pulses that are encountered or generated as the system moves from the zero position. Typically, these pulses are provided by use of a Hall effect sensor, an optical sensor or a make/break switch configuration. The advantage of such a system is its simplicity over the absolute sensors. The disadvantage is that if the pulses are counted in the wrong direction, the system will not correctly correspond to the position indicated. Another disadvantage is that if a stored position is incorrect, the system has no means of self calibration to provide continuous error correction.

DE-A-40 38 284 shows a motor control for a driven member. A sensor detects the angular position of the member by determining the number of pulses that are established corresponding to each of three groups of elements.

EP-A-0 047 463 shows an electronic micrometer. By rotating a spindle of the micrometer, a count in a control circuit determines the position of a disc substrate by sensing a contact pattern. A signal is obtained which corresponds to the contact pattern that is in registry with brush contacts to obtain a reading that represents the spacing at an anvil.

WO-A-89/04566 discloses a position indicator which obtains a reading by scanning sectors of signal tracks to obtain a reading that corresponds to the angular position of the part being scanned.

GB-A-2 125 645 discloses a rotary digital switch. A controller sequentially detects the difference in the switch position relative to a so-called set point stored in a ROM. If the current detected contact condition for the switch is different from the former contact condition stored in the memory, the switch is moved so that the stored value corresponds to the actual value following start-up.

### SUMMARY OF THE PRESENT INVENTION

The present invention includes an apparatus for position detection using signal patterns created by use of a fixed disk having three conductive patterns disposed thereon. The first and second patterns are annular conductive paths which are coaxial with respect to one another and the third pattern consists of radially extending conductive portions which are electrically connected to the second pattern. A brush carried by a rotating member whose position is sought to be determined is maintained in contact with the first and third pattern. In this manner an electrical signal variation is encountered as the radially extending conductive portions are encountered by the brush upon rotation thereof. This variation is thus correlated to the pattern defined on the third pattern. A microprocessor is used to add or subtract signals as the brush is rotated from a reference position based upon indicia of motor direction. Sequential radially extending conductive portions of said third pattern are arranged into subgroups which provide a unique signature corresponding to the respective position. A stored positional value is updated as rotation is initiated and after sufficient rotation has occurred to identify a subgroup, a comparison is performed to detect the presence of error. If no error is present the position will continue to be updated; adding and subtracting pulses. If an error is detected, the new subgroup and pulse position therein will be accepted as the correct positional value.

These and other aspects of the present invention will become more readily apparent by reference to the following detailed description of the embodiments as shown in the drawings.

### BRIEF DESCRIPTION OF THE DRAWINGS

Figure 1 is a plan view of the sensor used to determine position of a rotary shaft;
Figure 2 is a side view of the sensor used to determine position of a rotary shaft;
Figure 3 is a pulse pattern produced upon rotation of the disk of Figure 1; and
Figure 4 is a flow chart of the operational characteristics of the present invention.

### DETAILED DESCRIPTION OF THE PREFERRED EMBODIMENT

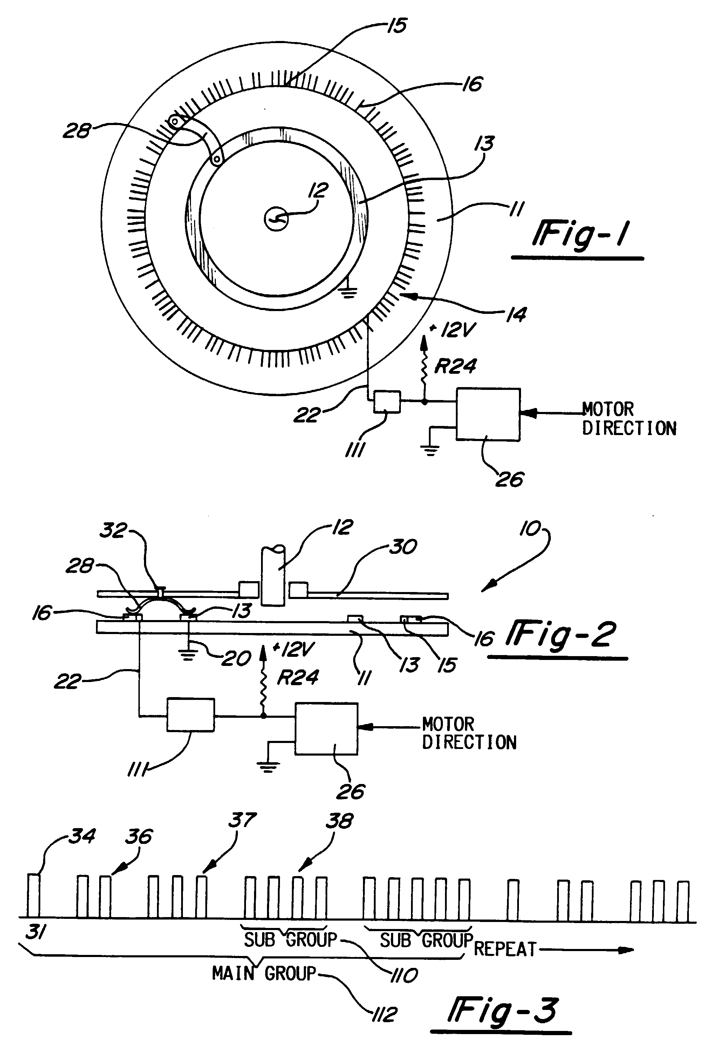

The preferred embodiment of the present invention as shown in Figure 1 and Figure 2, comprises a sensor 10 defined as a radially extending member in the form of a generally radially extending surface 11 fixed, rigidly with respect to movable component; rotary member in the form of a rotatable shaft 12. Surface 11 includes a first and second pattern 13, 14 defined thereon. First pattern 13 is a first annular conductive portion of surface 11. A second coaxial annular pattern 14 comprises a second portion 15 being annular and a third portion 16 comprising a pattern of radially extending conductive portions having a first void between sequential radially extending portions. The radially extending conductive portions are organized into sequentially unique subgroups which are separated by a second void. Each subgroup offering a sequentially unique signature is typically distinguished by an incremental radially extending portion. The groups are divided into subgroups and main groups as shown in Figure 3. The radially extending surface 11 is preferably constructed of an insulating material providing a high dielectric strength. The respective patterns are formed of a conductive coating which may be silk screened thereon or applied using known techniques of decalcomania or prepared and applied as metal stampings or prepared using known techniques of chemical etching. A first connection 20 known to those skilled in the art as a typical soldered connection provides electrical communication with first pattern 13 connecting same to a system ground. A second connection 22 connects annular portion 15 of the second pattern 14 to a 12 volt source through resistor R24. R24 provides a known circuit load. A low pass filter 111 is incorporated to eliminate any unwanted signal distortion due to brush contact discontinuity from bounce or dirt. Microprocessor 26 monitors voltage variation at point A of the respective circuit. A brush 28 is connected to rotary disk 30 by pin 32 and maintained in electrical continuity between portion 16 of pattern 14 and pattern 13. Brush 28 is a conventional sliding commutating brush which is well known to those skilled in the art. Such a system may be used to generate a signal pattern illustrated in Figure 3 which includes a reference or calibration position shown as locus 31 corresponding positionally with a first signal 34 spaced from a sequentially appearing pair of signals comprising subgroup 36, spaced from a sequentially appearing set of three signals comprising subgroup 37 spaced sequentially from a fourth set of signals comprising subgroup 38. The subgroups are positionally registered to correspond to unique positions of said movable component. Signal 34 and subgroup 36, 37, 38 collectively comprise a main group 112 which may be repeated about the perimeter of surface 11 or alternatively may appear as a singular main group comprising unique subgroups each featuring an incremental signal thereby providing a distinction from a sequentially preceding subgroup. Each sequential subgroup produces a unique signatured signal appearing as a respective group of voltage variations which provides a correlation to a specific location of rotary displacement. Such signal patterns are produced as a voltage variation as disk 30 carries brush 28 over the patterns defined on surface 11.

Using the signal pattern generated by the preferred embodiment of the present invention, it is possible to continuously verify the positional accuracy of a calculated position of a rotatable shaft by comparisons of calculated positions with actual positions. The calculated position can be determined by counting the signals or voids thereof encountered as the shaft is rotated from reference position 31 and adding or subtracting the signals or voids to a calibrated position. The decision to add or subtract is based upon a signal providing indicia of motor direction. Each sequential subgroup of pulses provides a unique signature consisting of the number of pulses present therein. If a calculated position does not match an actual position, the actual position is accepted.

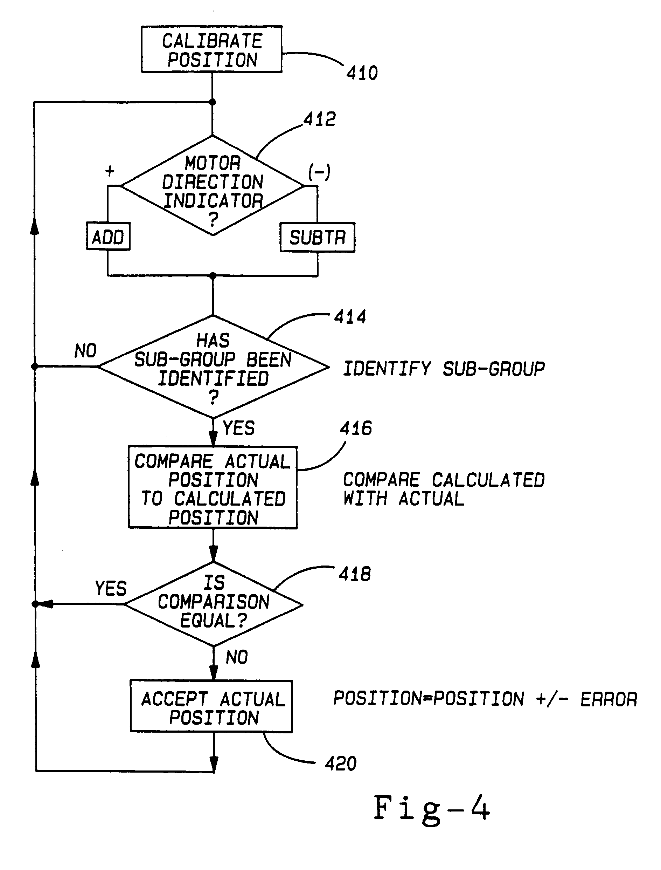

The system is initially calibrated by establishing a known position. Such a position may be an automobile window in closed position forced against a seal. Such a position is referred to as the calibrated position 410 of Figure 4. Movement from this position produces pulses which are counted and either added or subtracted in step 412. The decision to add or subtract is based upon motor direction. Once a subgroup has been identified in step 414, by comparison to stored signal sequence information, positional calculation determined in step 412 is compared in step 416 with the actual position of the respective identified subgroup. If the calculated and actual positions are identical, no error correction is made and the calculated position is verified. If not, position correction is made in step 420 accepting the actual position. The system is also capable of confirming direction of motion by the order in which the signal groups are generated. That is, if the signal groups are detected in a predetermined sequence, the direction is known from the sequence in which they appear. Finally, the velocity of the system can be determined by measuring the period of a signal as the signals are generated by the system. The preferred embodiment of the present invention incorporates a Motorola 68HC05P7 microcontroller. When programmed in machine language implementing the flow chart of Figure 4, the present invention provides an inexpensive and reliable sensor capable of monitoring the rotary position of a system component.

One skilled in the art will readily recognize that certain specific details shown in the foregoing specification and drawings are exemplary in nature and subject to modification without departing from the teachings of the disclosure. Various modifications of the invention discussed in the foregoing description will become apparent to those skilled in the art. All such variations that basically rely on the teachings through which the invention has advanced the art are properly considered within the scope of the invention.

## Claims

1. An apparatus for detecting the rotary position of a rotary member (12) comprising:
a radially extending member (11) fixed with respect to said rotary member (12);
said radially extending member (11) having a dielectric surface;
a first annular portion (13) disposed on said surface defining a continuous conductive path formed coaxial to said rotary member (12);
a second annular portion (15) disposed on said surface defining a conductive path coaxial to said first annular portion (13);
a third annular portion (16) disposed on said surface including spaced radially extending conductive portions;
said extending portions of said third portion (16) comprising subgroups (34, 36, 37, 38) including a first subgroup (34) sequentially followed by a second subgroup (36), said first subgroup (34) including one radially extending portion and said second subgroup (36) including two radially extending portions, said subgroups (34, 36, 37, 38) repeating to form a complete pattern about said third portion (16);
said second and third portions (15, 16) being electrically connected to one another;
first means (20) for connecting said first annular portion (13) to ground potential;
second means (22) for establishing a connection for said second annular portion (15);
third means (28) for establishing a slidable conductive connection between said first annular portion (13) and said third annular portion (16), said third means (28) being drivingly connected to said rotary member (12) for rotation therewith;
microprocessor means (26) for identifying the number of radially extending conductive portions in said slidable conductive connection and comparing said number to a predetermined number associated with each rotary portion of said rotary member (12); and
means (R24) for providing a voltage potential to said second annular portion (15) through said second means (22) for establishing said conductive connection for said second annular portion (15) whereby a position correction signal is established when said predetermined number differs from the number of radially extending conductive portions in any of said subgroups (34, 36, 37, 38).

2. The apparatus of claim 1, wherein said rotary member comprises a rotary shaft (12) drivingly engaged to a front radially extending member (30).

3. The apparatus of claim 2, wherein said spaced, radially extending conductive portions are arranged in sequentially unique subgroups (34, 36, 37, 38); and
a circuit (20, 22, R24) including a voltage source and a circuit load (R24), wherein said circuit (20, 22, R24) is alternately completed as said spaced, radially extending conductive portions contact said slidable conductive connection.

4. The apparatus of claim 3, wherein said sequentially unique subgroups (34, 36, 37, 38) comprise said first subgroup (34) including one radially extending portion sequentially followed by a void which is sequentially followed by said second subgroup (36) including two spaced radially extending conductive portions.

5. The apparatus of claim 3, wherein said microprocessor (26) includes means for detecting variations in voltage in said circuit (20, 22, R24).

## Patentansprüche

1. Vorrichtung zum Erfassen der Drehstellung eines rotierenden Teils (12) mit:
einem sich radial erstreckenden Teil (11), welches bezüglich des rotierenden Teils (12) feststehend ist,
wobei das sich radial erstreckende Teil (11) eine dielektrische Oberfläche hat,
einem ersten ringförmigen Abschnitt (13), der auf der Oberfläche angeordnet ist und einen durchgehenden leitenden Weg bildet, der koaxial zu dem rotierenden Teil (12) ausgebildet ist,
einem zweiten ringförmigen Abschnitt (15), der auf der Oberfläche angeordnet ist und einen leitenden Weg bildet, der koaxial zu dem ersten ringförmigen Abschnitt (13) ist,
einem dritten ringförmigen Abschnitt (16), der auf der Oberfläche angeordnet ist und sich radial erstreckende, voneinander beabstandete leitende Abschnitte enthält,
wobei die sich erstreckenden Abschnitte des dritten Abschnitts (16) Untergruppen (34, 36, 37, 38) enthalten, welche eine erste Untergruppe (34) beinhalten, die sequentiell von einer zweiten Untergruppe (36) gefolgt wird, wobei die erste Untergruppe (34) einen sich radial erstreckenden Abschnitt enthält und die zweite Untergruppe (36) zwei sich radial erstreckende Abschnitte enthält, wobei die Untergruppen (34, 36, 37, 38) sich wiederholen, um ein vollständiges Muster um den dritten Abschnitt (16) herum zu bilden,
wobei der zweite und der dritte Abschnitt (15, 16) elektrisch miteinander verbunden sind,
ersten Mitteln (20) zum Verbinden des ersten ringförmigen Abschnittes (13) mit dem Massepotential,
einem zweiten Mittel (22) zum Ausbilden einer Verbindung für den zweiten ringförmigen Abschnitt (15),
einem dritten Mittel (28) zum Ausbilden einer schleifenden elektrischen Verbindung zwischen dem ersten ringförmigen Abschnitt (13) und dem dritten ringförmigen Abschnitt (16), wobei das dritte Mittel (28) triebschlüssig und drehfest mit dem rotierenden Teil (12) verbunden ist,
einem Mikroprozessor (26) zum Identifizieren der Zahl der sich radial erstreckenden leitenden Abschnitte in der schleifenden leitenden Verbindung und zum Vergleichen der Zahl mit einer vorbestimmten Zahl, die jedem rotierenden Abschnitt des rotierenden Teils (12) zugeordnet ist, und
einem Mittel (R24) zum Liefern eines Spannungspotentials an den zweiten ringförmigen Abschnitt (15) durch das zweite Mittel (22) zum Ausbilden der leitenden Verbindung für den zweiten ringförmigen Abschnitt (15), wodurch ein Stellungskorrektursignal erzeugt wird, wenn die vorbestimmte Zahl sich von der Zahl von sich radial erstreckenden leitenden Abschnitten in einer der Untergruppen (34, 36, 37, 38) unterscheidet.

2. Vorrichtung nach Anspruch 1, bei der das rotierende Teil eine rotierende Welle (12) enthält, die triebschlüssig an einem sich radial erstreckenden vorderen Teil (30) angreift.

3. Vorrichtung nach Anspruch 2, bei der die voneinander beabstandeten, sich radial erstreckenden Abschnitte in aufeinanderfolgend einzigartigen Untergruppen (34, 36, 37, 38) angeordnet sind, und
mit einem Kreis (20, 22, R24), der eine Spannungsquelle und eine Kreislast (R24) enthält, wobei der Kreis (20, 22, 24) abwechselnd geschlossen wird, wenn die voneinander beabstandeten, sich radial erstreckenden leitenden Abschnitte die schleifende leitende Verbindung berühren.

4. Vorrichtung nach Anspruch 3, bei der die aufeinanderfolgend einzigartigen Untergruppen (34, 36, 37, 38) die erste Untergruppe (34) enthalten, die einen sich radial erstreckenden Abschnitt enthält, der sequentiell von einer Lücke gefolgt wird, auf die sequentiell die zweite Untergruppe (36) folgt, die zwei voneinander beabstandete, sich radial erstreckende leitende Abschnitte enthält.

5. Vorrichtung nach Anspruch 3, bei der der Mikroprozessor (26) ein Mittel zum Erfassen von Spannungsänderungen in dem Kreis (20, 22, R24) enthält.

## Revendications

1. Appareil pour détecter la position de rotation d'un élément rotatif (12) comprenant :
un élément s'étendant dans la direction radiale (11), fixe par rapport audit élément rotatif (12) ;
ledit élément s'étendant dans la direction radiale (11) ayant une surface diélectrique ;
une première partie annulaire (13) placée sur ladite surface définissant un passage conducteur continu coaxial avec ledit élément rotatif (12) ;
une seconde partie annulaire (15) placée sur ladite surface définissant un passage conducteur coaxial avec ladite première partie annulaire (13) ;
une troisième partie annulaire (16) placée sur ladite surface comprenant des parties conductrices espacées s'étendant dans la direction radiale ;
lesdites parties de ladite troisième partie (16) s'étendant dans la direction radiale formant des sous-groupes (34, 36, 37, 38) comprenant un premier sous-groupe (34) suivi séquentiellement par un second sous-groupe (36), ledit premier sous-groupe (34) comprenant une seule partie s'étendant dans la direction radiale, et ledit second sous-groupe (36) comprenant deux parties s'étendant dans la direction radiale, lesdits sous-groupes (34, 36, 37, 38) se répétant pour former une configuration complète autour de ladite troisième partie (16) ;
lesdites seconde et troisième parties (15, 16) étant électriquement connectées l'une à l'autre ;
un premier moyen (20) pour connecter ladite première partie annulaire (13) au potentiel de masse ;
un second moyen (22) pour établir une connexion avec ladite seconde partie annulaire (15) ;
un troisième moyen (28) pour établir une connexion conductrice coulissante entre ladite première partie annulaire (13) et ladite troisième partie annulaire (16), ledit troisième moyen (28) étant relié en entraînement audit élément rotatif (12) pour tourner avec lui ;
un moyen à microprocesseur (26) pour identifier le nombre des parties conductrices s'étendant dans la direction radiale dans ladite connexion conductrice coulissante, et pour comparer ledit nombre à un nombre prédéterminé associé à chaque partie rotative dudit élément rotatif (12) ; et
des moyens (R24) pour appliquer une tension à ladite seconde partie annulaire (15) grâce audit second moyen (22) pour établir ladite connexion conductrice avec ladite seconde partie annulaire (15), grâce à quoi un signal de correction de position est établi quand ledit nombre prédéterminé diffère du nombre des parties conductrices s'étendant dans la direction radiale dans l'un quelconque desdits sous-groupes (34, 36, 37, 38).

2. Appareil selon la revendication 1, dans lequel ledit élément rotatif comprend un arbre rotatif (12) en prise d'entraînement avec un élément avant (30) s'étendant dans la direction radiale.

3. Appareil selon la revendication 2, dans lequel lesdites parties conductrices espacées s'étendant dans la direction radiale sont agencées en sous-groupes séquentiellement uniques (34, 36, 37, 38) ; et
un circuit (20, 22, R24) comprenant une source de tension et une charge de circuit (R24), dans lequel ledit circuit (20, 22, R24) est alternativement fermé quand lesdites parties conductrices espacées s'étendant dans la direction radiale viennent en contact avec ladite connexion conductrice coulissante.

4. Appareil selon la revendication 3, dans laquelle lesdits sous-groupes séquentiellement uniques (34, 36, 37, 38) comprennent ledit premier sous-groupe (34) formé d'une seule partie s'étendant dans la direction radiale, séquentiellement suivi d'un vide, lequel est séquentiellement suivi par ledit second sous-groupe (36) formé de deux parties conductrices espacées s'étendant dans la direction radiale.

5. Appareil selon la revendication 3, dans lequel ledit microprocesseur (26) comprend un moyen pour détecter les variations de la tension dans ledit circuit (20, 22, R24).
